(19) Europäisches Patentamt European Patent Office Office européen des brevets

(11) **EP 3 804 524 A1**

(12) **EUROPEAN PATENT APPLICATION**
published in accordance with Art. 153(4) EPC

(43) Date of publication:
**14.04.2021 Bulletin 2021/15**

(51) Int Cl.:
**A21D 8/04** (2006.01)    **A21D 13/00** (2017.01)

(21) Application number: **19791496.3**

(86) International application number:
**PCT/JP2019/017045**

(22) Date of filing: **22.04.2019**

(87) International publication number:
**WO 2019/208506 (31.10.2019 Gazette 2019/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.04.2018 JP 2018082227**

(71) Applicant: **Mitsubishi Corporation Life Sciences Limited**
**Tokyo 100-0006 (JP)**

(72) Inventors:
• **HIRATSUKA Naoki**
  **Tokyo 100-0006 (JP)**
• **SAITO Takehito**
  **Tokyo 100-0006 (JP)**
• **ISHIZAKI Koki**
  **Tokyo 100-0006 (JP)**
• **NAKASHIZUKA Hiroki**
  **Tokyo 100-0006 (JP)**

(74) Representative: **Müller-Boré & Partner**
**Patentanwälte PartG mbB**
**Friedenheimer Brücke 21**
**80639 München (DE)**

(54) **TEXTURE-IMPROVING AGENT FOR BAKERY PRODUCTS**

(57)    By preparing a sour dough wherein texture-improving effect and aging-retarding effect deteriorated by powderization are improved, to obtain a novel texture-improving agent for bakery products that contains the sour dough as a main ingredient. [Solution] The present invention has been completed on the basis of a finding that a texture-improving agent for bakery products having excellent texture-improving effect and/or aging-retarding effect, from among effects achieved by adding a sour dough, can be provided by adding a starchy material to a sour dough having been fermented by a lactic acid bacterium followed by saccharification. By adding the texture-improving agent to a bakery product, the softness and moistness of the bakery product can be improved and, furthermore, retardation of aging thereof can be promoted.

EP 3 804 524 A1

**Description**

Technical Field

The present invention relates to a bakery product texture improving agent and a method for producing the same, and a food containing the bakery product texture improving agent and a method for producing the same.

Background Art

In bread and some confectionery made from wheat flour, rice flour, etc. as a main ingredient, as the storage time elapses, the texture becomes harder and when these are contained in a mouth, these make the mouth feel dry and difficult to eat. It is considered that one of the causes of such quality deterioration is aging of starch contained in a raw material, and research and development of various raw materials having an aging prevention function are promoted. One of the genres used to solve aging prevention with a raw material is a fermentation dough obtained by fermenting wheat flour or rye flour with a lactic acid bacterium or a yeast. A fermentation dough is generally known to improve the quality, such as bread flavor improvement, texture improvement, an effect of suppressing a microorganism that spoils food, and improvement of dough extensibility (Non Patent Literature 1 and Non Patent Literature 2).

Since the fermentation dough is a fermented food fermented with a lactic acid bacterium, etc., the fermentation dough is easily accepted by a confectionery/bread maker and a consumer who do not want to use a food additive, and may be used as a raw material to replace an aroma chemical and an emulsifier due to the addition effect. However, since an ordinary fermentation dough contains water required for fermentation, an organic acid which is a fermentation metabolite, and a raw material used for component adjustment, the addition effect is low compared to the food additive. When the amount of the fermentation dough added is excessively increased, the stickiness of a dough during bread making reduces workability, and the sour taste of an organic acid affects the flavor balance of the bread, so there was an upper limit to the amount of the fermentation dough added. In addition, since the fermentation dough itself has low storage stability, the fermentation dough needs to be refrigerated or frozen after production, and thus a restriction on the distribution form and a burden of a distribution cost were problems. Furthermore, since the property of the fermentation dough and the like is liquid or dough-like, the fermentation dough and the like cannot be used as a raw material for a confectionery/bread making premix.

In order to solve the above-mentioned problems, the liquid or dough-like fermentation dough is processed into a powdery fermentation dough. By adding a small amount of a powdery fermentation dough, appropriate fermented flavor can be imparted to bread and confectionery. Furthermore, the powdery fermentation dough improves storage stability of the fermentation dough itself and eliminates the inconvenience in terms of distribution, and are as easy to handle as powdery raw materials such as wheat flour to increase the versatility. For example, Patent Literature 1 is disclosed a method for producing a powdery fermentation dough obtained by adding one or several kinds of starch, modified starch, pregelatinized starch, and dried-treated starch to an alcohol-fermented fermentation dough and mixing them uniformly. The production method does not require the conventional Sponge Dough step, long-term Sponge Dough fermentation, and dough freezing. This production method can produce bread in a shorter time than a straight method. In addition, the production method improves the extensibility of a bread dough and makes the internal phase and texture of bread extremely soft. Furthermore, the powdery fermentation dough has good storage stability and flavor, and can be distributed in a refrigerator or at room temperature. Furthermore, in Patent Literature 2, Patent Literature 1 is described as follows. Since the powdery fermentation dough of Patent Literature 1 uses a large amount of an excipient for powderizing, the amount used for bread is limited. It has also been pointed out that the finished product has a high moisture content and has a doubt about storage stability because it does not undergo a drying step. Patent Literature 3 describes a dry fermentation dough dried with a drum dryer, preferably a vacuum drum dryer having a vacuum chamber, and discloses that the fermentation dough can improve storage stability and the like without impairing flavor.

However, the above-mentioned prior art Literature is an invention relating to flavor imparting, and it was difficult to enhance other addition effects of the fermentation dough. For example, it was difficult to enhance the addition effects in texture improvement, an effect of suppressing a microorganism that spoils food, and an improvement of dough extensibility. The reason is that when the liquid or dough-like fermentation dough is powderized, an excipient is often used, and dextrin, which is often used as the excipient, does not easily affect flavor, but is easy to affect the texture itself, and it also affects the physical properties of the dough during bread making to reduce workability. When an excipient is used for powderizing the fermentation dough, it is required to improve the fermentation dough exerting a texture improving effect and an aging suppressing effect equal to or higher than those of the liquid or dough-like fermentation dough.

Citation List

Patent Literature

> Patent Literature 1: JP 3471114 B2
> Patent Literature 2: JP 2003-265126 A
> Patent Literature 3: JP 2013-236626 A

Non Patent Literature

> Non Patent Literature 1: Brandt MJ; Sourdough products for convenient use in baking.; Food Microbiol. 2007 Apr; 24 (2); pp161-4.
> Non Patent Literature 2: Akihito Fujimoto, Takayuki Ito, Toshiaki Imura; Journal of Bioscience and Bioengineering; 2012 (6); pp25-30

Summary of Invention

Technical Problem

The object to be solved by the present invention is to further enhance the texture improving effect and the aging suppressing effect of the conventional fermentation dough whose addition effect was difficult to enhance due to addition of water required for fermentation, a raw material used for component adjustment, dextrin used as an excipient during powderizing, etc., and to provide a novel bakery product texture improving agent containing the fermentation dough as a main component.

Solution to Problem

As a result of diligent research on solving the above problem, the present inventors have found that it is possible to provide a bakery product texture improving agent that is excellent in a texture improving effect or/and aging suppressing effect among the addition effects of the fermentation dough by adding a starchy raw material to the fermentation dough fermented with a lactic acid bacterium using grain flour as a substrate and saccharifying the fermentation dough, and thus have reached the present invention. In the conventional technique, the addition of the starchy raw material is a method performed for the purpose of enhancing the texture improving effect and the aging suppressing effect. Furthermore, the saccharification treatment is a method performed for liquefying the fermentation dough and lowering the viscosity of the fermentation dough itself when the fermentation dough is sprayed and dried using spray-dry. The fermentation dough, a starchy raw material, or a saccharified decomposition product are added to bread independently to provide a certain degree of an addition effect. Alternatively, even when these three materials are added in an appropriate combination, a certain texture improving effect can be expected. However, the inventors have unexpectedly found that a texture improving effect and aging suppressing effect of the fermentation dough are dramatically enhanced only when the saccharification treatment of the fermentation dough is performed using an amylolytic enzyme under the conditions that the starchy raw material is added to the fermentation dough after the fermentation is completed.

That is, the present invention provides the following.

> (1) A method for producing a bakery product texture improving agent, the method comprising steps of: obtaining a fermentation dough by lactic fermentation; and adding a starchy raw material to the fermentation dough and saccharifying the fermentation dough with an amylolytic enzyme.
> (2) The method for producing a bakery product texture improving agent according to claim 1, wherein the starchy raw material is added 5 to 100 parts by weight with respect to 100 parts by weight of the fermentation dough and mixed.
> (3) The method for producing a bakery product texture improving agent according to claim 1 or 2, wherein the amylolytic enzyme is at least one kind of enzyme selected from the group consisting of $\alpha$-amylase, $\beta$-amylase, glucoamylase, $\alpha$-glucosidase, pullulanase, and isoamylase.
> (4) A food physical property improving agent obtained by adding an auxiliary raw material to the bakery product texture improving agent according to claims 1 to 3.
> (5) A bakery product produced according to a conventional method using the agent according to claim 1 or/and claim 6 as a raw material.
(6) The method for producing the bakery product according to claim 5.
(7) A method for improving a texture of a bakery product by using the agent according to claim 1 or/and claim 4 as a raw material.

Advantageous Effects of Invention

The details of the mechanism of the present invention are unknown, and the present invention is not limited to the following, but it is considered that the product obtained by coexisting and mixing a fermentation metabolite obtained by fermenting a grain flour with a lactic acid bacterium and a starchy raw material, and performing the saccharification treatment led to the improvement of the texture and the suppression of aging. In the present invention, by adding the texture improving agent to a bakery product, the softness and moist feeling of the bakery product can be improved, and the suppression of aging can be further improved.

Description of Embodiments

Hereinafter, the present invention is described in detail.
The fermentation dough used in the present invention is a liquid or dough-like fermented food obtained by fermenting with a lactic acid bacterium using grain flour as a substrate.
The grain flour used for the fermentation dough of the present invention can be exemplified by a flour prepared by grinding a grain, an endosperm of a grain, or the endosperm with a germ or a skin. Examples of the grain described here include wheat, rice (non-glutinous rice, glutinous rice), barley, rye, corn, foxtail millet, Japanese barnyard millet, and adlay, and as the grain flour, wheat flour (for example, strong flour, semi-strong flour, medium-strength flour, weak flour, whole grain flour), rice flour (top-grade rice flour made from non-glutinous rice, fine grade rice flour, glutinous rice flour, refined rice flour, brown rice flour, etc.), barley flour, rye flour (whole rye flour or peeled rye finely ground, medium ground, coarsely ground, and stone milled), corn flour, foxtail millet flour, Japanese barnyard millet flour, adlay flour, etc. can be used.
When the grain flour used for the fermentation dough of the present invention is wheat flour, the grain flour may be any one or more kinds of strong flour, semi-strong flour, medium-strength flour, weak flour, and whole grain flour, and in the fermentation step and powderizing of the bakery product texture improving agent, medium-strength flour or weak flour is preferable, and weak flour is more preferable, for reasons such as workability and high yield.
As the lactic acid bacterium used for the fermentation dough of the present invention, a commercial starter composed of at least one kind of strain can be used, and for example, a lactic acid bacterium starter for a fermentation dough or a lactic acid bacterium starter for the dairy industry can be used. In addition to the commercial starter, a lactic acid bacterium isolated from a fermentation dough obtained by naturally fermenting grain flour and a fruit/pericarp can also be used.
The lactic acid bacterium used for the fermentation dough of the present invention is not particularly limited as long as it is a lactic acid bacterium that grows well and can be fermented when fermented grain flour as a substrate (nutrient source). Examples of the lactic acid bacterium include Enterococcus durans, Lactobacillus alimentarius, Lactobacillus brevis, Lactobacillus delburueckii subsp. bulgaricus, Lactobacillus casei, Lactobacillus farciminis, Latobacillus fermentum, Lactobacillus fructivorans, Lactobacillus gallinarum, Lactobacillus gasseri, Lactobacillus helveticus, Lactobacillus namurensis, Lactobacillus paralimentarius, Lactobacillus plantarum, Lactobacillus rossiae, Lactobacillus salivarius, Lactobacillus sanfranciscensis, Leuconostoc citreum, Leuconostoc mesenteroides subsp. mesenteroides, Weissella cibaria, Weissella confusa, Weissella paramesenteroides, Pediococcus argentinicus, Pediococcus inopinatus, Pediococcus pentosaceus, and Lactococcus lactis subsp. lactis.
The fermentation dough used in the present invention may be in any one of liquid, pasty, or dough-like form, and fermented grain flour with lactic acid bacterium added is used. Preferably, 50-500 parts by weight of water and 0.001-20 parts by weight of a lactic acid bacterium starter or a lactic acid bacterium fermented liquid are added to 100 parts by weight of grain flour, mixed, and fermented. Since the viscosity with respect to water differs depending on the kind of grain flour used, the blending ratio of grain flour and water is appropriately adjusted according to the desired properties. In addition, as the lactic acid bacterium, the kind of bacterium that can metabolize the grain flour used as a nutrient source may be selected, and the amount of a lactic acid bacterium added, and the fermentation temperature, and the fermentation time can be adjusted according to the growth characteristics of the lactic acid bacterium. In order to maintain the fermentation temperature, equipment that can control a constant temperature may be used, an incubator or a constant temperature water tank may be used in the case of a small scale, and a fermentation tank with a temperature control function can be used in the case of an industrial scale. In addition, either static culture or stirring culture can be performed according to the characteristics of the lactic acid bacterium used for the fermentation dough, when performing stirring culture on a small scale, fermentation is performed using a stirrer or the like, or a tank with a stirring blade may be used on an industrial scale.

The guideline for completing the fermentation step of the fermentation dough used in the present invention is confirmed by measuring the pH value and acidity of the fermentation dough. The pH value is measured according to a glass electrode method. The range of both measured values for the fermentation dough in the present invention is a pH of 3.0 to 5.5 and an acidity of 2 to 30 (mL/10 g, 0.1 N-NaOH).

The starchy raw material used in the present invention is a starch-containing edible raw material. Examples of the starchy raw material include a flour prepared by grinding a grain, an endosperm of a grain, or the endosperm with a germ or a skin (cereal flour); a flour prepared by grinding a starch-containing plant seed other than a grain, an endosperm of the plant seed or, the endosperm with a germ or a skin (seed flour); a starchy material-containing vegetable, the powdered vegetable (vegetable flour); and a starchy material (starch) exclusively extracted from: a grain, a starchy material-containing plant seed other than grain, a starchy material-containing vegetable, or other plants.

The starch used in the present invention also includes modified starch (functional starch made by physically and chemically treating natural starch). Examples of such modified starch include acetylated adipic acid cross-linked starch, acetylated phosphorylated cross-linked starch, acetylated oxidized starch, starch sodium octenyl succinate, starch acetate, oxidized starch, hydroxypropyl starch, hydroxypropyl phosphate cross-linked starch, phosphated cross-linked starch phosphate, phosphorylated starch, cross-linked starch phosphate, unmodified pregelatinized starch, or modified pregelatinized starch, which is processed from potato starch, corn starch, tapioca starch, wheat starch, and the like as raw material starch.

The amylolytic enzyme used in the present invention can be selected from any one or more of $\alpha$-amylase, $\beta$-amylase, $\alpha$-glucosidase, pullulanase, and isoamylase. Since the viscosity of the fermentation dough is efficiently reduced, $\alpha$-amylase, $\alpha$-glucosidase, pullulanase, or isoamylase is preferable, $\alpha$-amylase is more preferable, and liquefied $\alpha$-amylase is further preferable. These enzymes may be derived from a microorganism, a plant, or an animal regardless of their origin, and a purified enzyme or a contaminating enzyme containing the enzymes may be used.

As the amylolytic enzyme, a commercially available product can be used as the purified enzyme. For example, the commercially available product of $\alpha$-amylase can be purchased from Amano Enzyme Inc., HBI Enzymes inc., SHINNIHON CHEMICALS Corporation, Novozymes Japan, and MITSUBISHI-Chemical FOODS CORPORATION. $\beta$-amylase can be purchased from GODO SHUSEI CO., LTD. and HBI Enzymes Inc., glucoamylase can be purchased from GODO SHUSEI CO., LTD. and Nagase ChemteX Corporation, and pullulanase can be purchased from Amano Enzyme inc. As for the amylolytic enzyme, one kind may be used alone, or two or more kinds may be combined.

The activity of $\alpha$-amylase used in the present invention can be measured, for example, as follows.

The activity of $\alpha$-amylase can be measured using a commercially available reagent kit such as "a-amylase measurement kit" (Kikkoman Biochemifa Company) or "$\alpha$-amylase measurement kit" (Nippon Biocon Ltd.), for example, when measuring with the "a-amylase measurement kit" (Kikkoman Biochemifa Company), the measurement follows the instruction manual of the measurement kit.

The activity of $\alpha$-amylase contained in the sample was determined according to the calculation formula described in the instruction manual.

$$\text{Activity of } \alpha\text{-amylase (U/g, sample before saccharification treatment)}$$
$$= \text{(absorbance of measurement sample} - \text{absorbance of blank) x 0.179 x 50 (dilution rate of measurement sample) x 5 (extraction rate)}$$
$$= \text{(absorbance of measurement sample} - \text{absorbance of blank)} \times 44.75$$

The numerical value 0.179 described in the calculation formula is a constant when the sample is pretreated according to the above conditions.

An example of the saccharification treatment in the present invention is described below. A fermentation dough whose pH value and acidity are measured to confirm the completion of fermentation is adjusted in pH according to the optimum pH of an enzyme used for the saccharification treatment. The raw material used for the pH adjustment may be either a food material or a food additive. The amount of the starchy raw material used may be adjusted according to the workability in powderizing and the yield of the powder finally collected. For example, the starchy raw material is added and mixed in an amount of 5 to 100 parts by weight, preferably 10 to 50 parts by weight, and more preferably 10 to 20 parts by weight based on 100 parts by weight of the fermentation dough after pH adjustment. The amount of the amylolytic enzyme added may be adjusted according to the characteristics and blending amount of the starchy raw material to be added. For example, 1 g of pregelatinized starch can be enzymatically reacted with 6.5 U of $\alpha$-amylase.

In the present invention, the bakery product texture improving agent is a novel agent to further enhance the texture improving effect and the aging suppressing effect of the fermentation dough whose value was difficult to enhance due to addition of water required for fermentation, a raw material used for component adjustment, dextrin used as an excipient during powderizing, and to contain the fermentation dough as a main component. Specifically, since the fermentation dough is in any one of liquid, dough-like and powdery forms when fermentation dough obtained by fermenting grain flour with lactic acid bacterium is saccharified, the liquid or dough-like reactant after the completion of the saccharification treatment described above corresponds to the bakery product texture improving agent. The reactant can be used immediately as a raw material for a bakery product, or when it takes time to use the reactant, a treatment for improving the storage state may be appropriately performed. For example, as the treatment, it is conceivable to deactivate the enzyme, sterilize by heating, add any one or more of salt, saccharides, sugar alcohol, isomerized liquid sugar, and brewed vinegar, or powderize, depending on the characteristics of the enzyme used. Any one or more treatments can be combined.

In the present invention, when the bakery product texture improving agent is powderized, the dry powderizing method can be appropriately selected according to the characteristics and properties of the texture improving agent. For example, the bakery product texture improving agent can be pulverized by any method such as a spray-drying method, a freeze-drying method, or a drum-drying method.

In the present invention, when the bakery product texture improving agent is powderized by the spray-drying method, for example, 15 to 25 parts by weight, preferably 20 parts by weight of dextrin and 5 to 15 parts by weight of water are added to 70 parts by weight of the liquid or dough-like bakery product texture improving agent and mixed. The mixed solution is spray-dried using a spray dryer as a test solution to be spray-dried.

In the present invention, the bakery product is a processed product produced by heat-treating a starchy raw material as a main raw material such as baking, oiling, steaming, or roasting in a covered pan, and examples of the bakery product include breads, dried breads, cakes, a waffle, a puff (dough of a cream puff and an eclair), a donut, fried confectionery, pie, pizza, and a crepe. Example of the bread include meal bread (for example, bread, rye bread, French bread (a baguette, a Parisian, and a cascroute), dry bread, variable bread (bread mixed with a raisin and a dice cheese), roll bread, a croissant, etc.), cooked bread (for example, a hot dog, a hamburger, a sandwich, curry bread, and a pizza pie), sweet bread (for example, jam bread, anpan (bread filled with pasty filling made by boiling an azuki with sugar), cream bread, raisin bread, melon bread (bread baked with a biscuit dough), a sweet roll, a brioche, a danish, and a corone), steamed bread (for example, a meat bun, a Chinese bun, an a Chinese bun with a bean-jam filling, and a steamed bun), and special bread (for example, a grissini, a muffin, a pizza dough, and nan). Examples of the dried bread product include a rusk and bread crumbs. Examples of the cake include a steamed cake, a sponge cake, a butter cake, a roll cake, a pancake, a dorayaki, a busse, a Baumkuchen, a pound cake, a cheese cake, and a snack cake.

In the present invention, the bakery product texture improving agent may be used as a food physical property improving agent capable of imparting a plurality of addition effects in combination with another food additive or food material. Example of the food additive or food material that can be used in combination with the agent include monoglycerin fatty acid ester, calcium stearoyl lactate, sodium stearoyl lactate, wheat gluten, corn starch, modified dextrin, xylanase, wheat starch, dextrin, processed fats and oils, palm hardened oil, sucrose fatty acid ester, sorbitan fatty acid ester, diacetyl tartrate monoglyceride, propylene glycol, guar gum, tricalcium phosphate, $\alpha$-amylase, $\beta$-amylase, glucose oxidase, hemicellulase, protease, potato starch, corn starch, salt, vitamin E, L-ascorbic acid, vitamin C, carotene pigment, lecithin, enzymatically decomposed lecithin, sodium caseinate, D-sorbitol, yeast extract, cystine, dietary fiber, flour, lipase, and phospholipase.

In the present invention, the bakery product texture improving agent can be used alone or in the form of a food physical property improving agent containing the agent as a raw material for a confectionery/bread making mix.

In the present invention, the method for adding the bakery product texture improving agent to a food is not particularly limited. For example, the bakery product texture improving agent may be added as a part of a raw material when a food is produced, or may be added after being mixed with another raw material. The timing of addition is not particularly limited, and is preferably added before or during mixing of the raw material because it is easy to make into a food.

In the present invention, the amount of the bakery product texture improving agent added is not particularly limited, and can be appropriately selected by a person skilled in the art according to the kind and property of a bakery product. The amount added is, for example, using baker's percent, preferably 0.01 to 20 parts by mass, more preferably 0.05 to 10 parts by mass, and further more preferably 0.1 to 5 parts by mass. Here, the baker's percent is generally used as a method for indicating the blending amount in the grain flour dough, and means the mass ratio of each of the other raw materials when the total mass of the blended flour is 100%. Baker's percentage is also called the percentage with respect to flour.

In the present invention, the bakery product produced by using the bakery product texture improving agent as a raw material has improved functional characteristics of a softness and a moist feeling compared to when the texture improving agent is not used. Furthermore, the bakery product to which the texture improving agent is added also improves the suppression of aging. Here, the softness of a bakery product means, for example, the hardness felt when a crumb of bread that has lost its rough heat after baking is pushed by hand, the hardness felt when bread is bitten by teeth, or hardness felt when the bolus contained in a mouth is chewed. Similarly, the moist feeling means a moist feeling felt on the surface when the crumb of bread is touched by hand, or a moist feeling felt during chewing from the time when the bread is contained in the mouth. Furthermore, the suppression of aging means, for example, suppressing the change in which bread gradually becomes hard during the storage period.

In the present invention, the bread, sponge cake, pound cake, cake donut, and steamed cake obtained in Examples 1 to 8 were subjected to sensory evaluation by eight trained professional panelists. As for bread, the sensory evaluation was performed 1 day after baking and 3 days after baking. Other bakery products were evaluated 1 day after baking. In the sensory evaluation test, the control was evaluated as 4 points for the "softness" and the "moist feeling". As for the "softness", the softer the bakery product, the better the evaluation, and the harder the bakery product, the worse the evaluation. In addition, as for the moist feeling, the higher the bakery product, the better the evaluation, and the drier the bakery product, the worse the evaluation. The sensory evaluation was performed using the 7 stage numerical values described below, and the average value and standard error were calculated.

Evaluation criteria for sensory evaluation

      7 points: exceptionally better than control
      6 points: better than control
      5 points: slightly better than control
      4 points: equivalent to control
      3 points: slightly worse than control
      2 points: worse than control
      1 point: much worse than control

About range of standard error obtained from sensory evaluation test

When the lower limit within the standard error range is 4 points or less, it is not recognized that there is an addition effect (Poor).

When the range of standard error is larger than 4 points and 5 points or less, it is recognized that there is an addition effect (Average).

When the range of the standard error is larger than 4.5 points and 5.5 points or less, it is recognized that the addition effect is high (Good).

When the upper limit within the standard error range is greater than 5.0 points, it is recognized that the addition effect is very high (Excellent).

Hereinafter, the present invention is specifically described with reference to Examples and Comparative Examples. The present invention is not limited to these.

The bakery product texture improving agent in the present invention is produced by a producing process that combines steps of using grain flour as a substrate for a fermentation dough, fermenting the grain flour with lactic acid bacterium, adding a starchy raw material after fermentation, and performing saccharification treatment. In Examples 1 to 4 below, the above four steps and the addition effect of the bakery product texture improving agents were verified using bread (straight method).

In the present invention, bread (straight method) can be prepared according to the following procedure. In the blending containing the bakery product texture improving agent, the agent may be mixed with the strong flour in advance.

Specifically, strong flour, sugar, salt, skim milk powder, yeast (DAIYA YEAST, Mitsubishi Corporation Life Sciences Limited), yeast food (PANDAIYA C-500, Mitsubishi Corporation Life Sciences Limited), water, and bakery product texture improving agent were weighed and kneaded with a vertical mixer. The stirring speed of the mixer was adjusted appropriately, and after confirming that gluten was formed in the dough, shortening was added and the mixture was kneaded again. After confirming that the dough and shortening were sufficiently mixed and gluten was formed again in the dough, mixing was completed, and the dough temperature at this time was defined as the kneading temperature. In addition, the kneading temperature was adjusted within 28 ± 0.5°C by appropriately cooling the dough during mixing. The kneaded dough was primary fermented in a constant temperature bath. After the primary fermentation was completed, the dough was divided, rolled and allowed to rest as bench time. After the bench time was over, the rolled dough was molded with a molder, and 440 g per loaf was molded into a pullman mold. The dough after molding into the mold was secondarily fermented in a hoiro (a temperature-controlled chamber), and after the fermentation was completed, the fermented product was baked in a reel oven or a fixed oven. After baking, the bread was cooled at room temperature for 90 minutes, packed in a plastic bag, and stored in a constant temperature bath kept at 25°C until it was used for the evaluation test.

The producing process of bread (straight method) is shown in Table 1.

[Table 1]

Table 1. Bread (straight method) producing process

| Producing process | Conditions |
|---|---|
| Mixing | Low speed for 3 minutes, medium low speed for 2 minutes, high speed for 1 minute, (addition of fat), low speed for 2 minutes, medium low speed for 3 minutes, high speed for 4 minutes |
| Kneading temperature | 28 ± 0.5 (°C) |
| Primary fermentation | 28°C, 60 minutes |
| Divide | 220 g |
| Bench time | Room temperature, 20 minutes |
| Molding | Pullman |
| Secondary fermentation | 38°C, 85% RH, 40 minutes |
| Baking | Top heat: 210°C, bottom: heat 200°C, 30 minutes |

Example 1

(Verification of Step of Using Grain Flour as Substrate for Fermentation Dough)

The outline of Example 1 is shown in Table 2.

[Table 2]

EP 3 804 524 A1

Table 2. Outline of Example 1: Comparison of grain flour substrates used for fermentation dough

| | Enzymatic decomposition of grain flour | | With/without fermentation and kind of bacterium | | | With/without and kind of starchy raw material | | | With/without saccharification treatment | |
|---|---|---|---|---|---|---|---|---|---|---|
| | Without | With | Fermentation dough A (A') | Fermentation dough B | Without fermentation | Pregelatinized starch | Weak flour | Without | With | Without |
| Implementation Group 1 | Good | Poor | Good | Poor | Poor | Good | Poor | Poor | Good | Poor |
| Comparative Group 1 | Poor | Good | Good | Poor | Poor | Good | Poor | Poor | Good | Poor |

The selected step or used items are described as good, and the unselected step or unused items are described as poor.

The lactic acid bacterium A: Weissella confusa used in the present invention can ferment grain flour (a substrate for a fermentation dough) or can ferment grain flour decomposed by an enzyme. On the other hand, it is also expected that the enzymatically decomposed product obtained by decomposing grain flour with amylase and protease will improve the texture of bread. In Example 1, the grain flour substrates used for the fermentation dough were compared.

The preparation method of the Implementation Groups and the Comparative Groups in Example 1 is described below.

In Implementation Group 1, fermentation was performed using lactic acid bacterium A: Weissella confusa (which can be metabolized using wheat flour as a nutrient source). The product obtained after fermentation was designated as a fermentation dough A. Sodium carbonate was added to the fermentation dough A to adjust the pH (pH 5.5 to 6.0), pregelatinized starch was added, and the starch contained in the fermentation dough A was decomposed by $\alpha$-amylase. The blending of each raw material is described below.

- 100 parts by weight of fermentation dough A (lactic acid bacterium A: Weissella confusa)
- 0.1 parts by weight of sodium carbonate
- 20 parts by weight of pregelatinized starch
- 0.02 parts by weight of $\alpha$-amylase
- 4 parts by weight of fermented vinegar

In Comparative Group 1, a grain flour decomposition product obtained by decomposing wheat flour with protease and amylase was used as a substrate for a fermentation dough. As for a method of preparing the grain flour decomposition product, 323 parts by weight of water was added to 100 parts by weight of wheat flour to disperse, and 39 U equivalent $\alpha$-amylase commercially available product (Amano Enzyme inc.) and 0.4 parts by weight of protease commercially available product (Amano Enzyme inc.) were added to the dispersed mixture and reacted at 70°C for 90 minutes, and then heated at 85°C for 30 minutes for heat inactivation to obtain a grain flour decomposition product. The fermentation dough fermented in the same manner as in Implementation Group 1 using the grain flour decomposition product as a substrate for the fermentation dough was designated as a fermentation dough A'. The blending of each raw material is described below.

- 100 parts by weight of fermentation dough A' (lactic acid bacterium A: Weissella confusa)
- 0.1 parts by weight of sodium carbonate
- 20 parts by weight of pregelatinized starch
- 0.02 parts by weight of $\alpha$-amylase
- 4 parts by weight of fermented vinegar

The liquid bakery product texture improving agents obtained in Implementation Group 1 and Comparative Group 1 were mixed with 20 parts by weight of dextrin and 10 parts by weight of water with respect to 70 parts by weight of the agent, and spray-dried with a spray dryer, respectively. The obtained powdery bakery product texture improving agents were designated as a bakery product texture improving agent 1 and a bakery product texture improving agent 1', respectively.

The addition effect of the bakery product texture improving agents obtained in Implementation Group 1 and Comparative Group 1 to bread was evaluated. The blendings are shown in Table 3.

[Table 3]

Table 3. Blendings of bread (straight method) in Example 1 (Unit: Bakers%)

|  | Additive-free Group | Implementation Group 1 | Comparative Group 1 |
|---|---|---|---|
| Strong powder | 100 parts | 100 parts | 100 parts |
| Sugar | 5 parts | 5 parts | 5 parts |
| Salt | 2 parts | 2 parts | 2 parts |
| Skim milk powder | 2 parts | 2 parts | 2 parts |
| Shortening | 5 parts | 5 parts | 5 parts |

(continued)

|  | Additive-free Group | Implementation Group 1 | Comparative Group 1 |
|---|---|---|---|
| Yeast | 3 parts | 3 parts | 3 parts |
| Yeast food | 0.1 parts | 0.1 parts | 0.1 parts |
| Water | 71 parts | 71 parts | 71 parts |
| Bakery product texture improving agent 1 | - | 0.25 parts | - |
| Bakery product texture improving agent 1' | - | - | 0.25 parts |

The results of the sensory evaluation for Example 1 are shown in Table 4.

[Table 4]

Table 4. Sensory evaluation results of Example 1

| | | Softness (1 day later) | Softness (3 days later) | Moist feeling (1 day later) | Moist feeling (3 days later) |
|---|---|---|---|---|---|
| Implementation Group 1 | Average value ± SE | 4.8 ± 0.2 | 5.3 ± 0.3 | 5.2 ± 0.2 | 5.1 ± 0.3 |
| | Evaluation | Good | Excellent | Excellent | Good |
| Comparative Group 1 | Average value ± SE | 4.6±0.2 | 4.1±0.2 | 4.9±0.2 | 4.6±0.1 |
| | Evaluation | Average | Poor | Good | Average |

As shown in Table 4, the Implementation Group 1 showed a very high texture improving effect in the "softness" and "moist feeling" after 1 day of storage as compared with the Additive-free Group. Even 3 days later, the "softness" was highly evaluated, therefore it was shown that the aging suppressing effect was also high. Comparative group 1 showed a high effect in the "moist feeling" after 1 day of storage, but no effect was shown in other items.

From the results of Implementation Group 1 and Comparative Group 1, as for the grain flour used for the fermentation dough, it was shown that the texture improving effect of bread can be enhanced by lactic fermentation of grain flour without enzymatic decomposition rather than lactic fermentation of grain flour in the enzymatically decomposed state.

Example 2

(Verification of Step of Fermenting Grain Flour with Lactic Acid Bacterium)

The outline of Example 2 is shown in Table 5.

[Table 5]

Table 5. Outline of Example 2: Effects and impacts of fermenting grain flour with lactic acid bacterium

|  | Enzymatic decomposition of grain flour | | With/without fermentation and kind of bacterium | | | With/without and kind of starchy raw material | | | With/without saccharification treatment | |
|---|---|---|---|---|---|---|---|---|---|---|
|  | Without | With | Fermentation dough A | Fermentation dough B | Without fermentation | Pregelatinized starch | Weak flour | Without | With | Without |
| Implementation Group 1 | Good | Poor | Good | Poor | Poor | Good | Poor | Poor | Good | Poor |
| Implementation Group 2 | Good | Poor | Poor | Good | Poor | Good | Poor | Poor | Good | Poor |
| Comparative Group 2 | Good | Poor | Poor | Poor | Good | Good | Poor | Poor | Good | Poor |

The selected step or used items are described as good, and the unselected step or unused items are described as poor.

The texture improving effect of bread obtained by fermenting grain flour with a lactic acid bacterium and the difference of the addition effect depending on the species of a lactic acid bacterium used were compared.

The adjustment method of the Implementation Groups and the Comparative Group in Example 2 is described below. In Implementation Group 1, the preparation was performed with the same contents as in the same test group in Example 1.

In Implementation Group 2, a fermentation dough B was fermented with a lactic acid bacterium B: Lactobacillus sanfranciscensis, which has an assimilation property for wheat flour. After sodium carbonate was added to adjust the pH (pH 5.5 to 6.0), pregelatinized starch was added, and the starch contained in the fermentation dough was decomposed by $\alpha$-amylase. The blending of each raw material is described below.

- 100 parts by weight of fermentation dough B (lactic acid bacterium B: Lactobacillus sanfrancisensis)
- 0.1 parts by weight of sodium carbonate
- 20 parts by weight of pregelatinized starch
- 0.02 parts by weight of $\alpha$-amylase
- 4 parts by weight of fermented vinegar

In Comparative Group 2, a wheat flour dough containing wheat flour and saccharides having the same blending as the fermentation dough A was prepared. After sodium carbonate was added to adjust the pH (pH 5.5 to 6.0), pregelatinized starch was added, and the starch contained in the flour dough was decomposed by $\alpha$-amylase. The blending of each raw material is described below.

- 100 parts by weight of flour dough (no addition of lactic acid bacterium)
- 0.1 parts by weight of sodium carbonate
- 20 parts by weight of pregelatinized starch
- 0.02 parts by weight of $\alpha$-amylase
- 4 parts by weight of fermented vinegar

The liquid bakery product texture improving agents obtained in Implementation Group 2 and Comparative Group 2 were mixed with 20 parts by weight of dextrin and 10 parts by weight of water with respect to 70 parts by weight of the agent, and spray-drying with a spray dryer, respectively. The obtained powdery bakery product texture improving agents were designated as bakery product texture improving agent 2' and bakery product texture improving agent 3', respectively.

The addition effect of the bakery product texture improving agents to bread obtained in the Implementation Group 1, the Implementation Group 2, and the Comparative Group 2 was evaluated. The blendings are shown in Table 6.

[Table 6]

Table 6. Blendings of bread (straight method) in Example 2 (Unit: Bakers%)

|  | Additive-free Group | Implementation Group 1 | Implementation Group 2 | Comparative Group 2 |
|---|---|---|---|---|
| Strong powder | 100 parts | 100 parts | 100 parts | 100 parts |
| Sugar | 5 parts | 5 parts | 5 parts | 5 parts |
| Salt | 2 parts | 2 parts | 2 parts | 2 parts |
| Skim milk powder | 2 parts | 2 parts | 2 parts | 2 parts |
| Shortening | 5 parts | 5 parts | 5 parts | 5 parts |
| Yeast | 3 parts | 3 parts | 3 parts | 3 parts |
| Yeast food | 0.1 parts | 0.1 parts | 0.1 parts | 0.1 parts |
| Water | 71 parts | 71 parts | 71 parts | 71 parts |

(continued)

|  | Additive-free Group | Implementation Group 1 | Implementation Group 2 | Comparative Group 2 |
|---|---|---|---|---|
| Bakery product texture improving agent 1 | - | 0.25 parts | - | - |
| Bakery product texture improving agent 2' | - | - | 0.25 parts | - |
| Bakery product texture improving agent 3' | - | - | - | 0.25 parts |

The results of the sensory evaluation for Example 2 are shown in Table 7.

[Table 7]

Table 7. Sensory evaluation results of Example 2

|  |  | Softness (1 day later) | Softness (3 days later) | Moist feeling (1 day later) | Moist feeling (3 days later) |
|---|---|---|---|---|---|
| Implementation Group 1 | Average value $\pm$ SE | 4.8 $\pm$ 0.2 | 5.3 $\pm$ 0.3 | 5.2 $\pm$ 0.2 | 5.1 $\pm$ 0.3 |
|  | Evaluation | Good | Excellent | Excellent | Good |
| Implementation Group 2 | Average value $\pm$ SE | 4.9$\pm$0.3 | 5.7$\pm$0.3 | 5.1 $\pm$ 0.3 | 5.7$\pm$0.3 |
|  | Evaluation | Good | Excellent | Good | Excellent |
| Comparative Group 2 | Average value $\pm$ SE | 4.1$\pm$0.2 | 4.2$\pm$0.3 | 4.8$\pm$0.1 | 4.2$\pm$0.2 |
|  | Evaluation | Poor | Poor | Average | Poor |

As shown in Table 7, even in the Implementation Group 2 that is different in the lactic acid bacterium species from the Implementation Group 1, a very high effect in the "softness" and "moist feeling" was shown after 1 day of storage, the evaluation of the "softness" was high even after 3 days of storage, and it was shown that the aging suppressing effect was high. On the other hand, in Comparative Group 2 in which fermentation by a lactic acid bacterium was not performed, the addition effect was observed in the "moist feeling" after 1 day of storage, but no effect was shown in other items.

From the above results, it was shown that the lactic fermentation is a necessary step for providing a high texture improving effect, and a lactic acid bacterium can be used regardless of the bacterial species

Example 3

(Verification of Step of Adding Starchy Raw Material after Fermentation)

The outline of Example 3 is shown in Table 8.

[Table 8]

Table 8. Outline of Example 3: Effects and impacts of adding starchy raw material after fermentation

| | Enzymatic decomposition of grain flour | | With/without fermentation and kind of bacterium | | | With/without and kind of starchy raw material | | | With/without saccharification treatment | |
|---|---|---|---|---|---|---|---|---|---|---|
| | Without | With | Fermentation dough A | Fermentation dough B | Without fermentation | Pregelatinized starch | Weak flour | Without | With | Without |
| Implementation Group 1 | Good | Poor | Good | Poor | Poor | Good | Poor | Poor | Good | Poor |
| Implementation Group 3 | Good | Poor | Good | Poor | Poor | Poor | Good | Poor | Good | Poor |
| Comparative Group 3 | Good | Poor | Good | Poor | Poor | Poor | Poor | Good | Good | Poor |

The selected step or used items are described as good, and the unselected step or unused items are described as poor.

The texture improving effect of bread obtained by adding a starchy raw material after fermentation and the difference of the addition effect depending on the kind of starchy raw material used were compared.

The preparation method of the Implementation Groups and the Comparative Group in Example 3 is described below. In Implementation Group 1, the preparation was performed with the same contents as in the same test group in Example 1.

In Implementation Group 3, the fermentation dough A fermented with lactic acid bacterium A: Weissella confusa was prepared, after sodium carbonate was added to adjust the pH (pH 5.5 to 6.0), weak flour was added, and the starch contained in fermentation dough was decomposed by $\alpha$-amylase. The blending of each raw material is described below.

- 100 parts by weight of fermentation dough A (lactic acid bacterium A: Weissella confusa)
- 0.1 parts by weight of sodium carbonate
- 20 parts by weight of weak flour
- 0.02 parts by weight of $\alpha$-amylase
- 4 parts by weight of fermented vinegar

In Comparative Group 3, fermentation dough A fermented with lactic acid bacterium A: Weissella confusa was prepared, after sodium carbonate was added to adjust the pH (pH 5.5 to 6.0), no starchy raw material was added, and the starch contained in the fermentation dough was decomposed by $\alpha$-amylase. The blending of each raw material is described below.

- 100 parts by weight of fermentation dough A (lactic acid bacterium A: Weissella confusa)
- 0.1 parts by weight of sodium carbonate
- 0.02 parts by weight of $\alpha$-amylase
- 4 parts by weight of fermented vinegar

The liquid bakery product texture improving agents obtained in Implementation Group 3 and Comparative Group 3 were mixed with 20 parts by weight of dextrin and 10 parts by weight of water with respect to 70 parts by weight of the agent, and spray-dried with a spray dryer, respectively. The obtained powdery bakery product texture improving agents were designated as bakery product texture improving agent 4' and bakery product texture improving agent 5', respectively.

The addition effect of the bakery product texture improving agents to bread obtained in the Implementation Group 1, the Implementation Group 3, and the Comparative Group 3 was evaluated.

The blendings are shown in Table 9.

[Table 9]

Table 9. Blendings of bread (straight method) in Example 3 (Unit: Bakers%)

|  | Additive-free Group | Implementation Group 1 | Implementation Group 3 | Comparative Group 3 |
|---|---|---|---|---|
| Strong powder | 100 parts | 100 parts | 100 parts | 100 parts |
| Sugar | 5 parts | 5 parts | 5 parts | 5 parts |
| Salt | 2 parts | 2 parts | 2 parts | 2 parts |
| Skim milk powder | 2 parts | 2 parts | 2 parts | 2 parts |
| Shortening | 5 parts | 5 parts | 5 parts | 5 parts |
| Yeast | 3 parts | 3 parts | 3 parts | 3 parts |
| Yeast food | 0.1 parts | 0.1 parts | 0.1 parts | 0.1 parts |
| Water | 71 parts | 71 parts | 71 parts | 71 parts |

(continued)

|  | Additive-free Group | Implementation Group 1 | Implementation Group 3 | Comparative Group 3 |
|---|---|---|---|---|
| Bakery product texture improving agent 1 | - | 0.25 parts | - | - |
| Bakery product texture improving agent 4' | - | - | 0.25 parts | - |
| Bakery product texture improving agent 5' | - | - | - | 0.25 parts |

The results of the sensory evaluation for Example 3 are shown in Table 10.

[Table 10]

Table 10. Sensory evaluation results of Example 3

|  |  | Softness (1 day later) | Softness (3 days later) | Moist feeling (1 day later) | Moist feeling (3 days later) |
|---|---|---|---|---|---|
| Implementation Group 1 | Average value ± SE | 4.8 ± 0.2 | 5.3 ± 0.3 | 5.2 ± 0.2 | 5.1 ± 0.3 |
|  | Evaluation | Good | Excellent | Excellent | Good |
| Implementation Group 3 | Average value ± SE | 4.8 ± 0.2 | 5.0±0.3 | 4.9±0.2 | 4.9±0.2 |
|  | Evaluation | Good | Good | Good | Good |
| Comparative Group 3 | Average value ± SE | 3.9±0.2 | 4.6±0.3 | 4.1±0.2 | 4.8±0.1 |
|  | Evaluation | Poor | Average | Average | Average |

As shown in Table 10, even in the Implementation Group 3 in which the weak flour was used instead of the pregelatinized starch used in the Implementation Group 1, a high texture improving effect was shown in the "softness" and "moist feeling" after 1 day of storage. Since the softness after 3 days of storage was also highly evaluated, it was found that the aging suppressing effect was also excellent. In Comparative Group 5 in which no starchy raw material was added, the addition effect was observed in the "moist feeling", but the high effect could not be provided.

From the above results, it was shown that adding the starchy raw material after fermentation of the fermentation dough is a necessary step for providing a high texture improving effect and the starchy raw material can be used regardless of the kind.

Example 4

(Impact on Step of Performing Saccharification Treatment after Fermentation)

The outline of Example 4 is shown in Table 11.

[Table 11]

Table 11. Outline of Example 4: Effects and impacts of saccharification treatment after fermentation

| | Use of grain flour | With/without fermentation and kind of bacterium | | Saccharification treatment after lactic fermentation | | With/without and kind of starchy raw material | | With/without saccharification treatment |
| --- | --- | --- | --- | --- | --- | --- | --- | --- |
| | With | Fermentation dough A | Without fermentation | With | Without | Pregelatinized starch | Without | With |
| Implementation Group 1 | Good | Good | Poor | Poor | Good | Good | Poor | Good |
| Comparative Group 4 | Good | Poor | Good | Poor | Good | Poor | Good | Good |
| Comparative Group 5 | Good | Poor | Good | Good | Poor | Good | Poor | Good |
| Comparative Group 6 | Good | Good | Poor | Good | Poor | Good | Poor | Good |

The selected step or used items are described as good, and the unselected step or unused items are described as poor.

In the present invention, the saccharification treatment is performed in advance to increase the fluidity of the agent so that it can be easily spray-dried with a spray dry when the bakery product texture improving agent is powderized. In the saccharification treatment, starch is rapidly decomposed by liquefied $\alpha$-amylase or the like. It is speculated that saccharides with various structures produced by saccharification treatment may contribute to the improvement of the "softness", "moist feeling" and "aging suppressing effect" of a bakery product.

In the bakery product texture improving agent, as a substance produced by enzymatic decomposition, products produced by saccharification treatment of grain flour and a product produced by saccharification treatment of a starchy raw material are included. The impacts of these products themselves on the texture improving effect of bread were compared.

The preparation method of the Implementation Groups and the Comparative Group in Example 4 is described below. In Implementation Group 1, the preparation was performed with the same contents as in the same test group in Example 1.

In Comparative Group 4, the wheat flour dough containing wheat flour and saccharides having the same blending as the fermentation dough A was prepared (wheat flour dough). The wheat flour dough was not subjected to lactic fermentation, no starchy raw material was added, and only saccharification treatment was performed. The blending of each raw material is described below.

- 100 parts by weight of flour dough (no addition of lactic acid bacterium)
- 0.02 parts by weight of $\alpha$-amylase
- 4 parts by weight of fermented vinegar

In Comparative Group 5, the wheat flour dough containing wheat flour and saccharides having the same blending as the fermentation dough A was prepared (wheat flour dough), and the saccharification treatment was performed. The product after the saccharification treatment was used as a wheat flour decomposition product. The lactic fermentation and addition of a starchy raw material were not performed in the step of preparing the wheat flour decomposition product. Furthermore, 20 parts by weight of pregelatinized starch and water were kneaded to prepare a pregelatinized starch dough, and the product obtained by saccharification treatment was used as a pregelatinized starch decomposition product. The lactic fermentation was not performed on the pregelatinized starch decomposition product either. A mixture of the obtained wheat flour decomposition product and pregelatinized starch decomposition product at a ratio of 2 : 1 was used as the bakery product quality improving agent 7 in Comparative Group 5.

- Wheat flour decomposition product -

- 100 parts by weight of wheat flour dough
- 0.02 parts by weight of $\alpha$-amylase
- 4 parts by weight of fermented vinegar

- Pregelatinized starch decomposition product -

- 20 parts by weight of pregelatinized starch
- 64 parts by weight of water
- 0.02 parts by weight of $\alpha$-amylase

- Bakery product quality improving agent 7 -

- 100 parts by weight of wheat flour decomposition product
- 50 parts by weight of pregelatinized starch decomposition product

In Comparative Group 6, the fermentation dough A was prepared and the saccharification treatment was performed without adding a starchy raw material. The product after the saccharification treatment was used as a fermentation dough A decomposition product. Furthermore, 20 parts by weight of pregelatinized starch and 64 parts by weight of water were kneaded to prepare a pregelatinized starch dough, and the product obtained by saccharification treatment was used as a pregelatinized starch decomposition product. The lactic fermentation was not performed on the pregelatinized starch decomposition product. A mixture of the obtained fermentation dough A decomposition product and pregelatinized starch decomposition product at a ratio of 2 : 1 was used as the bakery product quality improving agent 8 in Comparative Group 6.

- Fermentation dough A decomposition product -

100 parts by weight of fermentation dough A
0.02 parts by weight of α-amylase
4 parts by weight of fermented vinegar

- Pregelatinized starch decomposition product -

20 parts by weight of pregelatinized starch
64 parts by weight of water
0.02 parts by weight of α-amylase

- Bakery product quality improving agent 8 -

100 parts by weight of wheat flour decomposition product
50 parts by weight of pregelatinized starch decomposition product

The liquid bakery product texture improving agents obtained in Comparative Groups 4 to 6 were mixed with 20 parts by weight of dextrin and 10 parts by weight of water with respect to 70 parts by weight of the agent, and spraydried with a spray dryer, respectively. The obtained powdery bakery product texture improving agents were designated as bakery product texture improving agent 6', bakery product texture improving agent 7', and bakery product texture improving agent 8', respectively.

The addition effect of the bakery product texture improving agents obtained in Implementation Group 1, Comparative Group 4, Comparative Group 5, and Comparative Group 6 to bread was evaluated. The blendings are shown in Table 12.

[Table 12]

Table 12. Blendings of bread (straight method) in Example 4 (Unit: Bakers%)

|  | Additive-free Group | Example 1 | Comparative Group 4 | Comparative Group 5 | Comparative Group 6 |
|---|---|---|---|---|---|
| Strong powder | 100 parts | 100 parts | 100 parts | 100 parts | 100 parts |
| Sugar | 5 parts | 5 parts | 5 parts | 5 parts | 5 parts |
| Salt | 2 parts | 2 parts | 2 parts | 2 parts | 2 parts |
| Skim milk powder | 2 parts | 2 parts | 2 parts | 2 parts | 2 parts |
| Shortening | 5 parts | 5 parts | 5 parts | 5 parts | 5 parts |
| Yeast | 3 parts | 3 parts | 3 parts | 3 parts | 3 parts |
| Yeast food | 0.1 parts | 0.1 parts | 0.1 parts | 0.1 parts | 0.1 parts |

(continued)

| | Additive-free Group | Example 1 | Comparative Group 4 | Comparative Group 5 | Comparative Group 6 |
|---|---|---|---|---|---|
| Water | 71 parts | 71 parts | 71 parts | 70.5 parts | 70.5 parts |
| Bakery product texture improving agent 1 | - | 0.25 parts | - | - | - |
| Bakery product texture improving agent 6' | - | - | 0.25 parts | - | - |
| Bakery product texture improving agent 7' | - | - | - | 0.75 parts | - |
| Bakery product texture improving agent 8' | - | - | - | - | 0.75 parts |

The results of the sensory evaluation for Example 4 are shown in Table 13.

[Table 13]

Table 13. Sensory evaluation results of Example 4

| | | Softness (1 day later) | Softness (3 days later) | Moist feeling (1 day later) | Moist feeling (3 days later) |
|---|---|---|---|---|---|
| Implementation Group 1 | Average value $\pm$ SE | $4.8 \pm 0.2$ | $5.3 \pm 0.3$ | $5.2 \pm 0.2$ | $5.1 \pm 0.3$ |
| | Evaluation | Good | Excellent | Excellent | Good |
| Comparative Group 4 | Average value $\pm$ SE | $4.1 \pm 0.2$ | $4.2 \pm 0.3$ | $4.8 \pm 0.1$ | $4.2 \pm 0.2$ |
| | Evaluation | Poor | Poor | Average | Poor |
| Comparative Group 5 | Average value $\pm$ SE | $4.6 \pm 0.3$ | $5.0 \pm 0.3$ | $4.3 \pm 0.3$ | $4.8 \pm 0.2$ |
| | Evaluation | Average | Good | Poor | Average |
| Comparative Group 6 | Average value $\pm$ SE | $3.9 \pm 0.2$ | $4.6 \pm 0.3$ | $4.1 \pm 0.2$ | $4.8 \pm 0.1$ |
| | Evaluation | Poor | Average | Poor | Average |

As shown in Table 13, Comparative Group 4 did not provide a high addition effect in the "softness" and "moist feeling" after 1 day and 3 days of storage. It was shown that the product produced by saccharification treatment of only grain flour used as a substrate of the fermentation dough cannot provide a high texture improving effect. Comparative Group 5 also did not provide high addition effect except for the "softness" after 3 days of storage. It was shown that the combination of the product produced by saccharification treatment of the grain flour and the product produced by saccharification treatment of the pregelatinized starch did not provide a high texture improving effect. Furthermore, Comparative Group 6 also did not provide a high addition effect for the "softness" and "moist feeling" after 1 day and 3 days of storage. It was shown that even the combination of the product obtained by saccharification treatment of the grain flour by lactic fermentation and the product produced by saccharification treatment of the pregelatinized starch did not provide a high texture improving effect.

Based on the above results, in order to impart a high texture improving effect in the "softness" and "moist feeling" to the bakery product texture improving agent, it was shown that a bakery product texture improving agent having a high texture improving effect can be obtained only by adding pregelatinized starch to the fermentation dough obtained by fermenting grain flour with a lactic acid bacterium and performing saccharification treatment in the mixed state.

From the results of Example 1 to Example 4, in the bakery product texture improving agent in the present invention, it was shown to provide a high effect of improving the texture and suppressing aging of bread by the step of performing saccharification treatment under the conditions that a starchy raw material is added to the fermentation dough obtained by fermenting untreated grain flour with a lactic acid bacterium.

Based on the above results, as the bakery product texture improving agent from the next section, Implementation Group 1 was selected and evaluated.

Example 5

The addition effect of the bakery product texture improving agent to a sponge cake was verified. The blendings are shown in Table 14.

[Table 14]

Table 14. Blendings of sponge cakes in Example 5 (Unit: Bakers%)

| Raw material | Additive-free Group | Implementation Group 4 |
|---|---|---|
| Weak flour | 100 | 100 |
| Whole egg | 166.7 | 166.7 |
| Granulated sugar | 100 | 100 |
| Gas forming agent | 8.3 | 8.3 |
| Milk | 16.7 | 16.7 |
| Butter | 33.3 | 33.3 |
| Bakery product texture improving agent 1 | 0 | 3.3 |

In the present invention, the sponge cake can be prepared according to the following procedure. In the blending in which the bakery product texture improving agent contains, the agent can be mixed with the weak flour in advance.

Prearrangement: Melt the butter. Sift the weak flour. Keep the milk warm.

Step 1: Mix the whole egg, granulated sugar, milk, and a gas foaming agent with a tabletop mixer.

Step 2: Add weak flour and mix (low speed for 0.5 minutes, medium low speed for 3 minutes, and medium high speed for 2 minutes).

Step 3: Add the melted butter and mix (low speed for 0.5 minutes) to bring the specific gravity of the mixture to 0.45.

Step 4: Dispense 400 g of the dough into a cake mold (No.5 mold).

Step 5: Bake at 180°C for 38 minutes in an electric bread-baking oven.

Storage: Cool at room temperature for 90 minutes, pack in a plastic bag, and store in a constant temperature bath (25°C setting) until used for the evaluation test.

The results of the sensory evaluation for Example 5 are shown in Table 15.

[Table 15]

Table 15. Sensory evaluation of sponge cake in Example 5

| | | Softness (1 day later) | Moist feeling (1 day later) |
|---|---|---|---|
| Implementation Group 4 | Average value ± SE | 4.8±0.3 | 4.8±0.3 |
| | Evaluation | Good | Good |

The bakery product texture improving agent improved the "softness" and "moist feeling" of the sponge cake.

Example 6

The addition effect of the bakery product texture improving agent to a pound cake was verified. The blendings are shown in Table 16.

[Table 16]

Table 16. Blendings of pound cakes in Example 6 (Unit: Bakers%)

| Raw material | Additive-free Group | Implementatio n Group 8 | Implementatio n Group 9 |
|---|---|---|---|
| Weak flour | 100 | 100 | 100 |
| Granulated sugar | 90 | 90 | 90 |
| Leavening agent | 2 | 2 | 2 |
| Margarine | 60 | 60 | 60 |
| Whole egg | 80 | 80 | 80 |
| Water | 15 | 15 | 15 |
| Bakery product quality improving agent | - | 0.8 | 2.4 |

In the present invention, the pound cake can be prepared according to the following procedure. In the blending in which the bakery product texture improving agent contains, the agent can be mixed with the weak flour in advance.
Prearrangement: The margarine and the whole egg were brought to room temperature. The weak flour and the leavening agent were shifted together.

Step 1: The margarine was mixed until creamy in a bowl of a tabletop mixer.
Step 2: The granulated sugar was mixed in several portions.
Step 3: The whole egg and water were mixed little by little.
Step 4: The weak flour and the leavening agent were mixed (low speed for 1 minute).
Step 5: The dough (450 g) was dispensed into a pound cake mold and baked in an electric bread-baking oven at 180°C for 50 minutes.

Storage: Cool at room temperature for 90 minutes, pack in a plastic bag, and store in a constant temperature bath (25°C setting) until used for the evaluation test.
The results of the sensory evaluation for Example 6 are shown in Table 17.

[Table 17]

Table 17. Sensory evaluation of pound cake in Example 6

| | | Softness (1 day later) | Moist feeling (1 day later) |
|---|---|---|---|
| Implementation Group 8 | Average value ± SE | 4.6±0.1 | 4.4±0.2 |
| | Evaluation | Average | Average |
| Implementation Group 9 | Average value ± SE | 4.8 ± 0.2 | 4.7±0.2 |
| | Evaluation | Good | Good |

The bakery product texture improving agent improved the "softness" and "moist feeling" of the pound cake.

Example 7

The addition effect of the bakery product texture improving agent to a cake donut was verified. The blendings are shown in Table 18.

[Table 18]

Table 18. Blendings of cake donuts in Example 7 (Unit: Bakers%)

| Raw material | Additive-free Group | Implementation Group 10 |
|---|---|---|
| Strong powder | 80 | 80 |
| Weak flour | 20 | 20 |
| Granulated sugar | 30 | 30 |
| Whole egg | 30 | 30 |
| Water (milk) | 5 | 5 |
| Butter | 10 | 10 |
| Baking powder | 3 | 3 |
| Bakery product texture improving agent | - | 3 |

In the present invention, the cake donut can be produced according to the following procedure. In the blending in which the bakery product texture improving agent contains, the agent can be mixed with the weak flour in advance.

Step 1: The whole egg, the granulated sugar, and water were weighed and mixed in a bowl of a tabletop mixer.
Step 2: The weak flour and the melted butter were mixed (low speed for 2 minutes).
Step 3: The dough was allowed to rest in a refrigerator for 30 minutes.
Step 4: The dough was folded in three with a reverse sheeter and rolled to make two sets of the dough with a length of 8 cm, a width of 3 cm, and a thickness of 5 mm.
Step 5: The dough was cut out with a donut mold.
Step 6: The front and back of the dough were fried for 1 minute and 45 seconds each in a fryer heated to 180 °C.

Storage: Cool at room temperature for 90 minutes, pack in a plastic bag, and store in a constant temperature bath (25°C setting) until used for the evaluation test.
The results of the sensory evaluation for Example 7 are shown in Table 19.

[Table 19]

Table 19. Sensory evaluation of cake donuts in Example 7

| | | Softness (1 day later) | Moist feeling (1 day later) |
|---|---|---|---|
| Implementation Group 10 | Average value ± SE | 4.8 ± 0.2 | 4.7±0.2 |
| | Evaluation | Good | Good |

The bakery product texture improving agent improved the "softness" and "moist feeling" of the cake donut.

Example 8

The addition effect of the bakery product texture improving agent to the steamed cake was verified. The blendings are shown in Table 20.

[Table 20]

Table 20. Blendings of steamed cakes in Example 8 (Unit: Bakers%)

| Raw material | Additive-free Group | Implementation Group 12 |
|---|---|---|
| Weak flour | 100 | 100 |
| Sugar | 100 | 100 |
| Gas forming agent | 4 | 4 |
| Whole egg | 100 | 100 |
| Salad oil | 10 | 10 |
| Water | 25 | 25 |
| Leavening agent | 2 | 2 |
| Bakery product texture improving agent | - | 2 |

In the present invention, the steamed cake can be produced according to the following procedure. In the blending in which the bakery product texture improving agent contains, the agent can be mixed with the weak flour in advance.

Step 1: The gas forming agent, the whole egg, and water were weighed in a bowl of a tabletop mixer and mixed (low speed for 0.5 minutes and medium low speed for 0.5 minutes).
Step 2: The sugar was added and mixed (low speed for 2 minutes).
Step 3: The weak flour and the baking powder were added and mixed (low speed for 1 minute, medium low speed for 2 minutes, and medium high speed for 1 minute).

The specific gravity was 0.5.

Step 4: The salad oil was added little by little and mixed lightly (low speed for 0.5 minutes).
Step 5: The dough was weighed in cups at 45 g each and steamed with a steamer (95 $\pm$ 10°C, 20 minutes).

Storage: The cake was cooled at room temperature for 90 minutes, packed in a plastic bag, and stored in a constant temperature bath (25°C setting) until used for the evaluation test.
The results of sensory evaluation for Example 8 are shown in Table 21.

[Table 21]

Table 21. Sensory evaluation results of Example 8

| | | Softness (1 day later) | Moist feeling (1 day later) |
|---|---|---|---|
| Implementation Group 12 | Average value $\pm$ SE | 4.8 $\pm$ 0.2 | 4.8 $\pm$ 0.1 |
| | Evaluation | Good | Good |

The bakery product texture improving agent improved the "softness" and "moist feeling" of the steamed cake.

Industrial Applicability

It has been found that it is possible to provide a bakery product texture improving agent that is excellent in a texture improving effect or/and aging suppressing effect among the addition effects of the fermentation dough by adding a starchy raw material to the fermentation dough fermented with a lactic acid bacterium and saccharifying the fermentation dough. By adding the texture improving agent to a bakery product, the softness and moist feeling of the bakery product can be improved, and the suppression of aging can be further improved. Since the agent is a powdery fermentation dough, it is expected to be used as a raw material for a confectionery/bread making premix regardless of the distribution form and storage conditions.

**Claims**

1. A method for producing a bakery product texture improving agent, the method comprising steps of:

    obtaining a fermentation dough by lactic fermentation; and
    adding a starchy raw material to the fermentation dough and saccharifying the fermentation dough with an amylolytic enzyme.

2. The method for producing a bakery product texture improving agent according to claim 1, wherein the starchy raw material is added 5 to 100 parts by weight with respect to 100 parts by weight of the fermentation dough and mixed.

3. The method for producing a bakery product texture improving agent according to claim 1 or 2, wherein the amylolytic enzyme is at least one kind of enzyme selected from the group consisting of α-amylase, β-amylase, glucoamylase, α-glucosidase, pullulanase, and isoamylase.

4. A food physical property improving agent obtained by adding an auxiliary raw material to the bakery product texture improving agent according to claims 1 to 3.

5. A bakery product produced according to a conventional method using the agent according to claim 1 or/and claim 6 as a raw material.

6. The method for producing the bakery product according to claim 5.

7. A method for improving a texture of a bakery product by using the agent according to claim 1 or/and claim 4 as a raw material.

**INTERNATIONAL SEARCH REPORT**

| International application No. |
| --- |
| PCT/JP2019/017045 |

A.  CLASSIFICATION OF SUBJECT MATTER
Int.Cl.  A21D8/04(2006.01)i, A21D13/00(2017.01)i

According to International Patent Classification (IPC) or to both national classification and IPC

B.   FIELDS SEARCHED

Minimum documentation searched (classification system followed by classification symbols)
Int.Cl.  A21D8/04, A21D13/00

Documentation searched other than minimum documentation to the extent that such documents are included in the fields searched
    Published examined utility model applications of Japan      1922–1996
    Published unexamined utility model applications of Japan    1971–2019
    Registered utility model specifications of Japan            1996–2019
    Published registered utility model applications of Japan    1994–2019

Electronic data base consulted during the international search (name of data base and, where practicable, search terms used)
    JSTPlus/JST7580(JDreamIII), CAplus/WPIDS/FSTA/BIOSIS(STN)

C.    DOCUMENTS CONSIDERED TO BE RELEVANT

| Category* | Citation of document, with indication, where appropriate, of the relevant passages | Relevant to claim No. |
| --- | --- | --- |
| A | JP 2002-345392 A (NICHIRYO BAKING CO., LTD.) 03 December 2002 (Family: none) | 1-7 |
| A | JP 2009-142181 A (PLOBAIO INTERNATIONAL CO., LTD.) 02 July 2009 (Family: none) | 1-7 |
| A | JP 11-266775 A (BIOTECH JAPAN CORPORATION) 05 October 1999 (Family: none) | 1-7 |

☒    Further documents are listed in the continuation of Box C.        ☐    See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 09.07.2019 | 23.07.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2019/017045 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2008-136460 A (THE TORIGOE CO., LTD.) 19 June 2008<br>& US 2008/0113079 A1 & EP 1929873 A1 | 1-7 |
| A | JP 10-117673 A (THE TORIGOE CO., LTD.) 12 May 1998<br>(Family: none) | 1-7 |
| A | JP 8-242756 A (THE TORIGOE CO., LTD.) 24 September 1996<br>(Family: none) | 1-7 |

Form PCT/ISA/210 (continuation of second sheet) (January 2015)

**EP 3 804 524 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 3471114 B
- JP 2003265126 A
- JP 2013236626 A

### Non-patent literature cited in the description

- **BRANDT MJ.** Sourdough products for convenient use in baking. *Food Microbiol.,* April 2007, vol. 24 (2), 161-4
- **AKIHITO FUJIMOTO ; TAKAYUKI ITO ; TOSHIAKI IMURA.** *Journal of Bioscience and Bioengineering,* 2012, 25-30